# EUROPÄISCHE PATENTSCHRIFT

(11) **EP 2 474 749 B1**
(45) Veröffentlichungstag und Bekanntmachung des Hinweises auf die Patenterteilung: **23.11.2016**
(21) Anmeldenummer: 11010261.3
(22) Anmeldetag: 28.12.2011
(51) Int. Cl.: F16B 37/08, G01M 1/04

(54) **Schnellspannmutter, insbesondere zur Befestigung eines Fahrzeugrades auf der Aufspannwelle einer Auswuchtmaschine**
Quick tensioning nut, in particular for fixing a vehicle tyre to the tension shaft of a balancing machine
Ecrou de serrage rapide, notamment pour la fixation d'une roue de véhicule sur un arbre de tension d'une machine d'équilibrage

(30) Priorität: 07.01.2011 DE 102011008057
(43) Veröffentlichungstag der Anmeldung: 11.07.2012
(73) Patentinhaber: Haweka AG, 30938 Burgwedel (DE)
(72) Erfinder: Warkotsch, Dirk, 30938 Burgwedel (DE)
(74) Vertreter: Von Rohr Patentanwälte Partnerschaft mbB

(56) Entgegenhaltungen:
- EP-A1- 1 103 734
- WO-A1-98/15743
- DE-A1- 3 605 821

## Beschreibung

Die Erfindung betrifft eine Schnellspannmutter, insbesondere ausgebildet zur Befestigung eines Fahrzeugrades auf der Aufspannwelle einer Auswuchtmaschine, mit einem Gehäuseteil und mit wenigstens zwei in dem Gehäuseteil radial bewegbar angeordneten Gewindesegmenten und mit einem Betätigungsmittel zur radialen Bewegung der Gewindesegmente, wobei jedes Gewindesegment einen Innengewindeabschnitt aufweist und wobei die Gewindesegmente entlang Führungsflächen des Gehäuseteils von einer Eingriffstellung in radialer Richtung nach außen in eine Außereingriffstellung bewegbar sind.

Eine Schnellspannmutter der vorgenannten Art ist bereits aus der DE 36 05 821 A1 bekannt. Die bekannte Schnellspannmutter weist ein Gehäuse auf, an dem sich zwei Handgriffe zum Festziehen der Schnellspannmutter befinden. In dem Gehäuse befinden sich diametral gegenüberliegend Schlitze mit seitlichen Führungsflächen sowie axialen Führungsflächen. In jedem Schlitz ist ein Segment, das ein Innengewinde aufweist, radial verschlieblich gelagert, wobei eine axiale Stirnfläche des Segmentes mit einer axialen Stirnfläche des Schlitzes zusammenwirkt. Obere axiale Stirnflächen der Segmente liegen an einer Scheibe an, die in einer stirnseitigen Ausnehmung drehbar und mit geringem Spiel gelagert ist, wobei sie von außen durch einen Gehäusedeckel gehalten ist, der mittels Schrauben an dem Gehäuse befestigt ist. Die Segmente weisen im Bereich ihrer oberen axialen Stirnflächen kurze Zapfen auf, die in schräge Schlitze in der Scheibe eingreifen und so zusammen mit diesen eine Kulissenführung bilden. Zwischen der Scheibe und dem Gehäusedeckel befindet sich eine Wendelfeder, die mit ihren Enden jeweils mit der Scheibe und dem Gehäusedeckel verbunden ist und unter Vorspannung derart steht, dass die Scheibe entgegen dem Uhrzeigersinn vorgespannt ist, wodurch gleichzeitig über die Kulissenführung die Segmente radial nach innen gedrückt sind. An der Scheibe befinden sich Arme zur Betätigung der Scheibe in Drehrichtung entgegen der Kraft der Wendelfeder.

Bei Gebrauch der bekannten Schnellspannmutter in Verbindung mit einer Wuchtmaschine zum Auswuchten von Fahrzeugrädern wird zunächst ein Fahrzeugrad mit seiner Felge auf die Welle der Auswuchtmaschine aufgeschoben, wobei diese Welle ein Außengewinde entsprechend dem Innengewinde der Schnellspannmutter aufweist. Danach wird die Schnellspannmutter mit einer Hand beispielsweise an dem Handgriff ergriffen, wobei mit dem Daumen gegen einen Arm der Scheibe gedrückt und so die Scheibe im Uhrzeigersinn entgegen der Kraft der Wendelfeder gedrückt wird. Durch die Kulissenführung werden die Segmente radial nach außen in eine Außereingriffstellung bewegt. In diesem Zustand kann die Schnellspannmutter über das Gewinde der Achse der Auswuchtmaschine hinweggeschoben und gegen die Felge gedrückt werden, die auf der abgewandten Seite an einem entsprechenden Flansch zur Anlage kommt. Ist die Schnellspannmutter ausreichend angedrückt worden, so wird der Daumen von dem Arm genommen, so dass die Wendelfeder die Scheibe entgegen dem Uhrzeigersinn bewegt. Dadurch werden die Segmente über die Kulissenführung radial nach innen bewegt, so dass die Innengewindeabschnitte der Segmente voll mit dem Außengewinde der Achse der Wuchtmaschine in Eingriff kommen. Aufgrund der Kraftübersetzung in der Kulissenführung sind die Gewindesegmente in der Schließstellung gleichzeitig arretiert, da unter diesen Bedingungen die Kulissenführung selbsthemmend ist. Anschließend wird die Schnellspannmutter mittels beider Handgriffe endgültig festgezogen.

Darüber hinaus ist aus der DE 36 05 821 A1 eine weitere Schnellspannmutter bekannt, die in radialer Richtung nach außen schwenkbare Gewindesegmente aufweist, die über eine Kulissenführung mit einer Scheibe gekoppelt sind, wobei die Benutzung der Schnellspannmutter in gleicher Weise erfolgt wie oben angegeben. Auch hier soll ein selbsttätiges Auseinanderbewegen der Gewindesegmente aufgrund der Selbsthemmung der genannten Kulissenführung nicht möglich sein, so dass die Schnellspannmutter in der Spannlage arretiert ist.

Bei den bekannten Schnellspannmuttern entstehen bei Druckbelastung der Innengewindeabschnitte der Gewindesegmente über das Außengewinde beispielsweise der Welle einer Auswuchtmaschine in radialer Richtung nach außen gerichtete auf die Gewindesegmente wirkende Kraftkomponenten. Diese nach außen gerichteten Öffnungskräfte sollen durch die Steuerscheibe abgefangen werden, die über die Kulissenführung bei den bekannten Schnellspannmuttern mit den Gewindesegmenten verbunden ist. Aufgrund von Fertigungstoleranzen ist die Kulissenführung jedoch spielbehaftet. Das vorhandene Spiel kann insbesondere mit zunehmendem Gewindeverschleiß dazu führen, dass die Gewindesegmente bei Druckbelastung aufgrund der entstehenden Kraftkomponenten in radialer Richtung voneinander weggedrückt und in eine Außereingriffstellung bewegt werden. Darüber hinaus unterliegen die Gewindeabschnitte der Gewindesegmente bei den bekannten Schnellspannmuttern einem erhöhten Verschleiß, was die Gefahr der Selbstöffnung des Gewindes unter Druckbelastung noch vergrößert. Schließlich weisen die bekannten Schnellspannmuttern eine vergleichsweise große Bauhöhe auf, was ebenfalls von Nachteil ist.

Aufgabe der vorliegenden Erfindung ist es, eine Schnellspannmutter der eingangs genannten Art zur Verfügung zu stellen, bei der die vorgenannten Nachteile nicht auftreten. Insbesondere soll bei Druckkräften in axialer Richtung ein selbsttätiges Öffnen der Schnellspannmutter durch Bewegung der Gewindesegmente in die Außereingriffstellung sicher ausgeschlossen sein. Darüber hinaus soll sich die Schnellspannmutter durch einen geringen Verschleiß der Gewindeflächen und durch eine geringe Bauhöhe auszeichnen.

Zur Lösung der vorgenannten Aufgaben sind gemäß einer ersten Ausführungsform der Erfindung bei einer Schnellspannmutter der eingangs genannten Art in radialer Richtung nach außen ansteigende schräge Führungsflächen für die Gewindesegmente vorgesehen, wobei die Führungsflächen bei der Bewegung der Gewindesegmente in radialer Richtung mit komplementär ausgebildeten schrägen Stirnflächen der Gewindesegmente zusammenwirken.

Die Gewindesegmente sind vorzugsweise beim Überführen von der Eingriffstellung in die Außereingriffstellung in einer linearen Verstellbewegung quer zur Mittellängsachse der Schnellspannmutter und damit in radialer Richtung nach außen verschiebbar. Insbesondere sind die Gewindesegmente dann nicht schwenkbar an dem Gehäuseteil gelagert.

Der Erfindung liegt an dieser Stelle der Grundgedanke zugrunde, bei Druckbelastung der Gewindesegmente durch die erzwungene Bewegung der Gewindesegmente entlang einer schiefen Ebene radial nach innen gerichtete Kraftkomponenten zu erzeugen. Dadurch wird das Auseinanderdrücken der Gewindesegmente bei Druckbelastung erschwert und kann bei geeigneter Festlegung des Steigungswinkels der Schrägen vollständig ausgeschlossen werden. Zudem wird der Verschleiß an den Gewindesegmenten verringert.

Die Gewindesegmente können zusätzlich gerade (radiale) Stirnflächen aufweisen, die an die schrägen Stirnflächen angrenzen und in der Eingriffstellung auch gegen gerade (radiale) Stützflächen des Gehäuseteils anliegen können. Im Eingriffszustand sind die Gewindesegmente dann an dem Gehäuseteil über die zusammenwirkenden radialen Flächen zusätzlich in axialer Richtung abgestützt, was zu einer hohen Stabilität der erfindungsgemäßen Schnellspannmutter und einer geringen Verschleißneigung beiträgt. Bei der durch Betätigung des Betätigungsmittels erzwungenen Bewegung der Gewindesegmente nach außen in die Außereingriffstellung werden die Gewindesegmente radial nach außen entlang der schrägen Führungsflächen des Gehäuseteils verschoben und dann von den geraden Stützflächen des Gehäuseteils abgehoben.

Die Gewindesegmente können als Kreisringsegmente ausgebildet sein und sich vorzugsweise über eine Bogenlänge eines Kreissektors mit einem Mittelpunktswinkel von mehr als 150°, weiter vorzugsweise bis 180°, erstrecken. Durch die gegenüber dem Stand der Technik größere Erstreckung der Gewindesegmente in Umfangsrichtung kann eine größere tragende Gewindefläche bereitgestellt werden, was den Verschleiß an den Gewindesegmenten weiter verringert. Insbesondere können ungehärtete Gewindesegmente eingesetzt werden. Grundsätzlich ist aber auch eine Bauhöhenreduzierung der Gewindesegmente aufgrund der größeren Erstreckung in Umfangsrichtung möglich. Um aneinandergrenzende gerade und schräge Stirnflächen an den Gewindesegmenten zu schaffen, können diese stirnseitig bereichsweise abgeschrägt sein, wobei sich eine Abschrägung vorzugsweise nicht bis in den Bereich der beiden Enden eines Kreisringsegmentes erstreckt. Zudem können die Kreisringsegmente an den Enden seitlich abgeflacht sein und gerade äußere Seitenflächen aufweisen, die an eine die geraden Seitenflächen verbindende kreisförmige äußere Seitenfläche angrenzen und mit geraden seitlichen Führungsflächen des Gehäuseteils zusammenwirken können.

Um das ungewollte selbsttätige Öffnen der Gewindesegmente unter Last sicher ausschließen zu können, ist der Steigungswinkel einer schrägen Führungsfläche größer als der halbe Flankenwinkel des Innengewindeabschnitts. In diesem Zusammenhang ist vorgesehen, dass der Steigungswinkel einer schrägen Führungsfläche zwischen 1° bis 5°, vorzugsweise zwischen 2° bis 3°, größer sein kann als der halbe Flankenwinkel des Innengewindeabschnitts. Ist beispielsweise das Innengewinde als Trapezgewinde ausgebildet mit einem halben Flankenwinkel von 15°, kann der Steigungswinkel der schrägen Führungsflächen ca. 17° betragen. Dadurch ist sichergestellt, dass die Gewindesegmente bei Druckbelastung nach innen gezogen werden und es nicht zu einer Bewegung der Gewindesegmente in eine Außereingriffstellung kommen kann.

Bei einem Gebrauch der bekannten Schnellspannmuttern in Verbindung mit einer Wuchtmaschine zum Auswuchten von Fahrzeugrädern werden die Schnellspannmuttern mit einem Druckring gegen einen Spannflansch bzw. eine Spannplatte oder eine Felge auf der Welle verspannt. Ist der Druckring nicht exakt zu dem Gehäuse der Schnellspannmutter ausgerichtet, kann dies beim Gebrauch der Schnellspannmutter zu einem erhöhten Verschleiß an den Innengewindeabschnitten der Gewindesegmente führten, was die Gefahr einer ungewollten Bewegung der Gewindesegmente bei Druckbelastung in eine Außereingriffstellung erhöht.

Zur Lösung der eingangs genannten Aufgaben ist gemäß einer alternativen Ausführungsform der Erfindung bei einer Schnellspannmutter mit den eingangs genannten Merkmalen daher vorgesehen, dass an dem Gehäuseteil ein Druckring bewegbar gelagert ist. Durch den bewegbar zum Gehäuseteil angeordneten Druckring können Fluchtungsfehler ausgeglichen werden, so dass die Gewindeflächen der Gewindesegmente bei der erfindungsgemäßen Schnellspannmutter in der Spannlage exakt gegen das Außengewinde beispielsweise einer Welle der Auswuchtmaschine anliegen können. Dies führt zu einer Verringerung der Abnutzung der Gewindeflächen beim Gebrauch der erfindungsgemäßen Schnellspannmutter und wirkt vorbeugend gegen ein ungewolltes selbsttätiges Öffnen der Gewindesegmente bei Druckbelastung.

Bei einer weiter bevorzugten Ausführungsform ist der Druckring dreh- und schwenkbar (sphärisch) an dem Gehäuseteil gelagert, was eine exakte Ausrichtung der Druckrings relativ zu dem Gehäuseteil der Schnellspannmutter gewährleistet und eine gleichmäßige Flächenpressung der Gewindeflächen der Gewindesegmente sicherstellt. In diesem Zusammenhang kann das Gehäuseteil auf der Seite des Druckrings eine konvexe sphärische Gleitfläche und der Druckring eine konkave sphärische Gleitfläche aufweisen, wobei der Druckring in der Art einer Lagerschale mit dem Gehäuseteil verbunden ist. Zur Verbindung des Druckrings mit dem Gehäuseteil kann eine Rast- und/oder Klemmverbindung, insbesondere über den Rand des Druckrings, vorgesehen sein.

Um Fluchtungsfehler wirkungsvoll ausgleichen zu können, kann eine relative Bewegbarkeit zwischen dem Druckring und dem Gehäuseteil bzw. ein Ausgleichswinkel bei sphärischer Lagerung des Druckrings an dem Gehäuseteil von wenigstens ± 0,5°, vorzugsweise von ± 1° bis 3°, vorgesehen sein.

Die vorgenannten Aspekte und Merkmale der vorliegenden Erfindung sowie die nachfolgend unter Bezugnahme auf die Zeichnung beschriebenen Aspekte und Merkmale der vorliegenden Erfindung können unabhängig voneinander, aber auch in einer beliebigen Kombination realisiert werden.

Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigen:
- Fig. 1: eine erfindungsgemäße Schnellspannmutter in einer Draufsicht, wobei Gewindesegmente der Schnellspannmutter sich in einer Engriffstellung befinden,
- Fig. 2: eine Seitenansicht der in Fig. 1 dargestellten Schnellspannmutter,
- Fig. 3: eine Schnittansicht der in Fig. 1 dargestellten Schnellspannmutter entlang der Linie III-III aus Fig. 1,
- Fig. 4: eine Schnittansicht der in Fig. 1 dargestellten Schnellspannmutter entlang der Linie IV-IV aus Fig. 1,
- Fig. 5: eine Draufsicht auf die in Fig. 1 dargestellte Schnellspannmutter, nachdem die Gewindesegmente in eine Außereingriffstellung bewegt sind,
- Fig. 6: eine Seitenansicht der in Fig. 5 dargestellten Schnellspannmutter,
- Fig. 7: eine Schnittansicht der in Fig. 5 dargestellten Schnellspannmutter entlang der Linie VII-VII aus Fig. 5,
- Fig. 8: eine Schnittansicht der in Fig. 5 dargestellten Schnellspannmutter entlang der Linie VIII-VIII aus Fig. 5,
- Fig. 9: die Einzelheit IX aus Fig. 3,
- Fig. 10: eine schematische Darstellung einer Steuerscheibe der in den Fig. 1 bis 8 dargestellten Schnellspannmutter zusammen mit zwei Gewindesegmenten der Schnellspannmutter in einer Seitenansicht, wobei die Gewindesegmente in eine Außereingriffstellung bewegt sind und
- Fig. 11: eine perspektivische Darstellung auf die in Fig. 10 dargestellte Anordnung gebildet aus der Steuerscheibe und den beiden Gewindesegmenten in einer Ansicht schräg von oben.

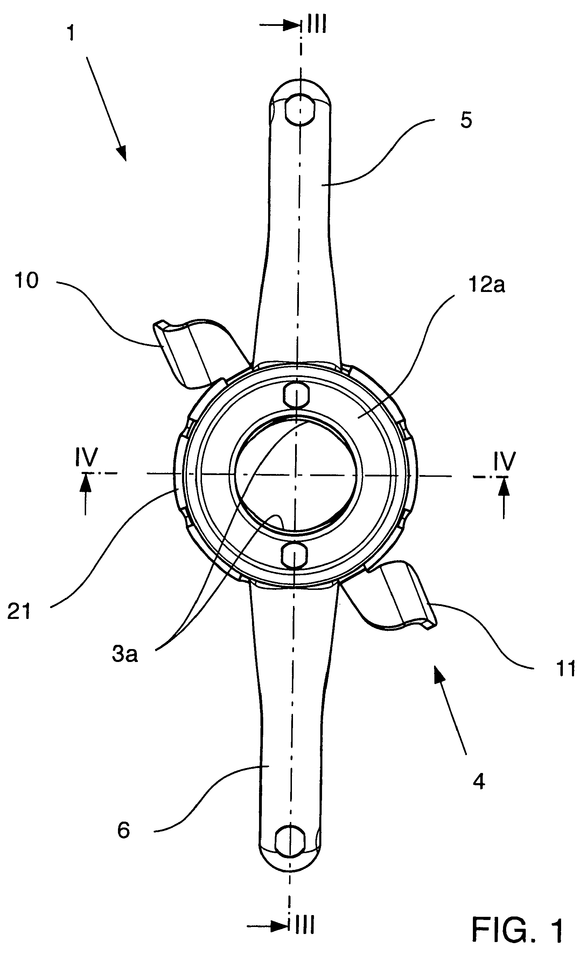

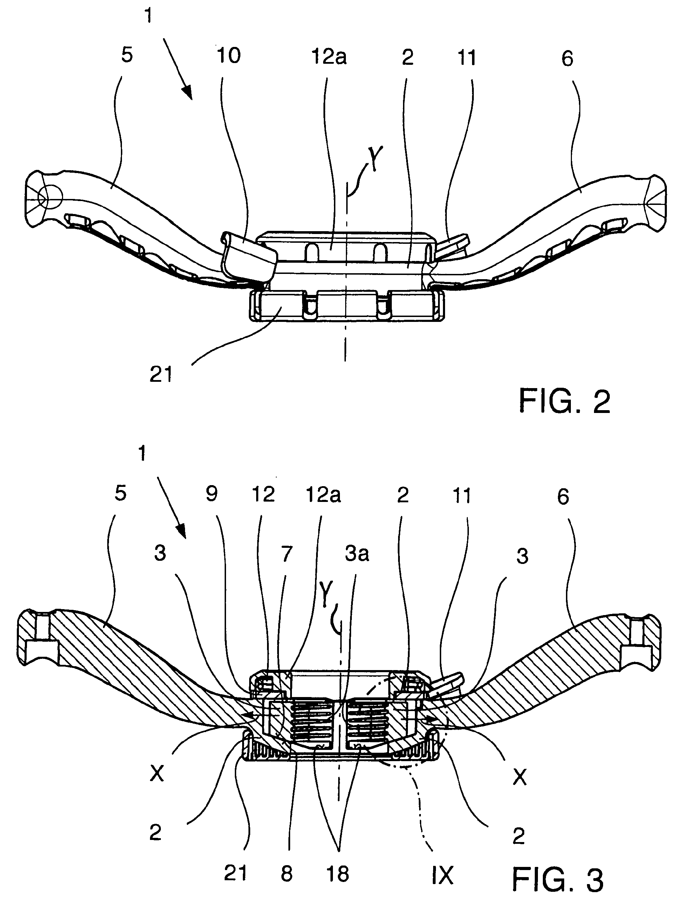

In den Fig. 1 bis 8 ist eine Schnellspannmutter 1 zur Befestigung eines Fahrzeugrades auf der Aufspannwelle einer Auswuchtmaschine gezeigt, die ein Gehäuseteil 2 und zwei in dem Gehäuseteil 2 radial bewegbar angeordnete Gewindesegmente 3 sowie ein Betätigungsmittel 4 zur radialen Bewegung der Gewindesegmente 3 aufweist. An dem Gehäuseteil 2 sind zwei Handgriffe 5, 6 vorgesehen zum Festziehen der Schnellspannmutter 1. Wie sich insbesondere aus den Fig. 3, 4, und 7 bis 9 ergibt, weist jedes Gewindesegmente 3 einen Innengewindeabschnitt 3a auf.

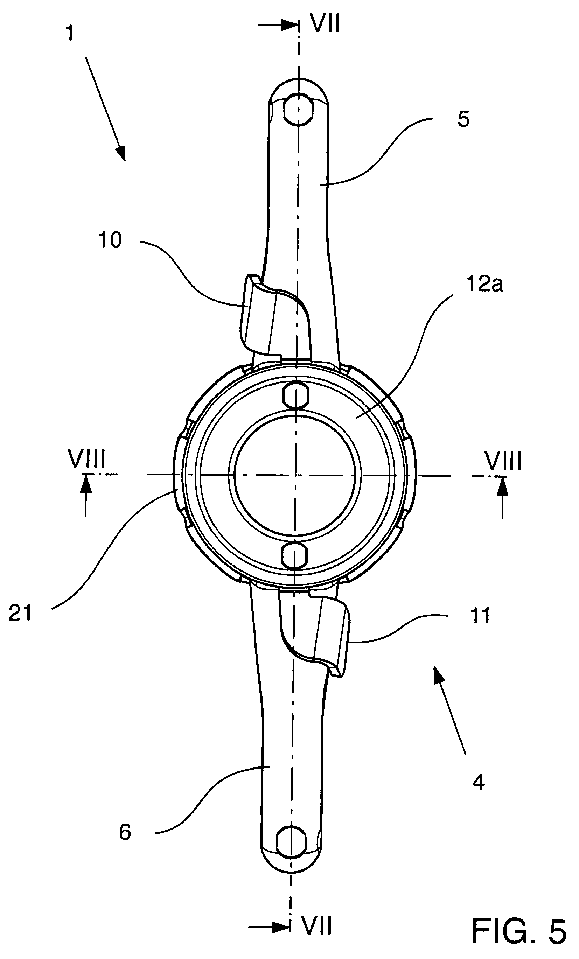

Die Gewindesegmente 3 sind entlang von Führungsflächen 7 des Gehäuseteils 2 von einer Eingriffsstellung, die in den Fig. 1 bis 4 dargestellt ist, in eine Außereingriffstellung, die in den Fig. 5 bis 11 dargestellt ist, in radialer Richtung nach außen bewegbar bzw. verschiebbar.

Um bei Druckkräften, die im Eingriffszustand über das Außengewinde einer Welle der Auswuchtmaschine auf die Gewindesegmente 3 wirken, zu verhindern, dass die Gewindesegmente 3 in radialer Richtung ungewollt in eine Außereingriffstellung bewegt werden, sind die Führungsflächen 7 in radialer Richtung nach außen ansteigend ausgebildet, wobei die schrägen Führungsflächen 7 bei der Bewegung der Gewindesegmente 3 in radialer Richtung mit komplementär ausgebildeten schrägen Stirnflächen 8 der Gewindesegmente 3 zusammenwirken.

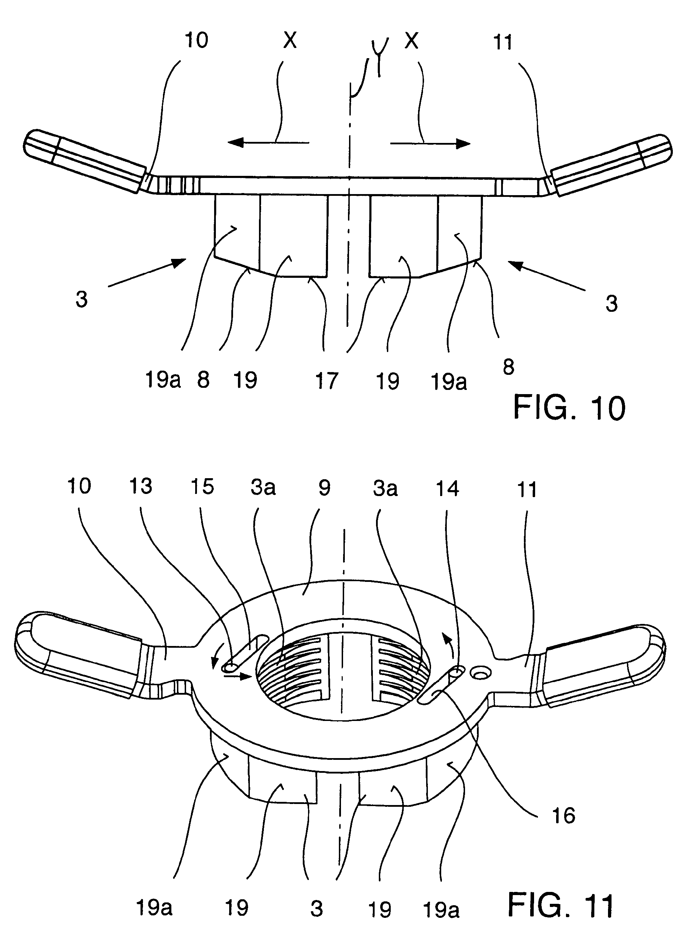

Die Verstellung der Gewindesegmente 3 von einer Eingriffsstellung in eine Außereingriffstellung erfolgt mittels einer Steuerscheibe 9, die über eine Kulissenführung in an sich aus der DE 36 05 821 A1 bekannter Weise mit den Gewindesegmenten 3 gekoppelt ist. Die Kulissenführung ist dabei gleichzeitig selbsthemmend, so wie dies in der DE 36 05 821 A1 beschrieben ist. Zur Betätigung der Steuerscheibe 9 sind an der Scheibe 9 Arme 10, 11 vorgesehen, mit denen sich die Steuerscheibe 9 entgegen der Kraft einer Wendelfeder 12 drücken lässt, was über die Kulissenführung zu einer Verstellbewegung der Gewindesegmente 3 radial nach außen in eine Außereingriffstellung führt. Die Wendelfeder 12 ist mit ihren Enden mit der Scheibe 9 und einem Gehäusedeckel 12a verbunden. Die Kopplung der Gewindesegmente 3 mit der Steuerscheibe 9 erfolgt gemäß Fig. 11 über Zapfen 13, 14 an oberen Stirnflächen der Gewindesegmente 3, die in schräge Schlitze 15, 16 in der Steuerscheibe 9 eingreifen. Dadurch kommt es bei einer Drehbewegung der Steuerscheibe 9 lediglich zu einer linearen Verstellbewegung in Pfeilrichtung X der Gewindesegmente 3 quer zur Mittellängsachse Y der Schnellspannmutter 1 bzw. quer zur Mittellängsachse einer mittleren Öffnung zum Aufschieben auf die Aufspannwelle im Gehäuseteil 2 nach außen, was in Fig. 3 schematisch gezeigt ist.

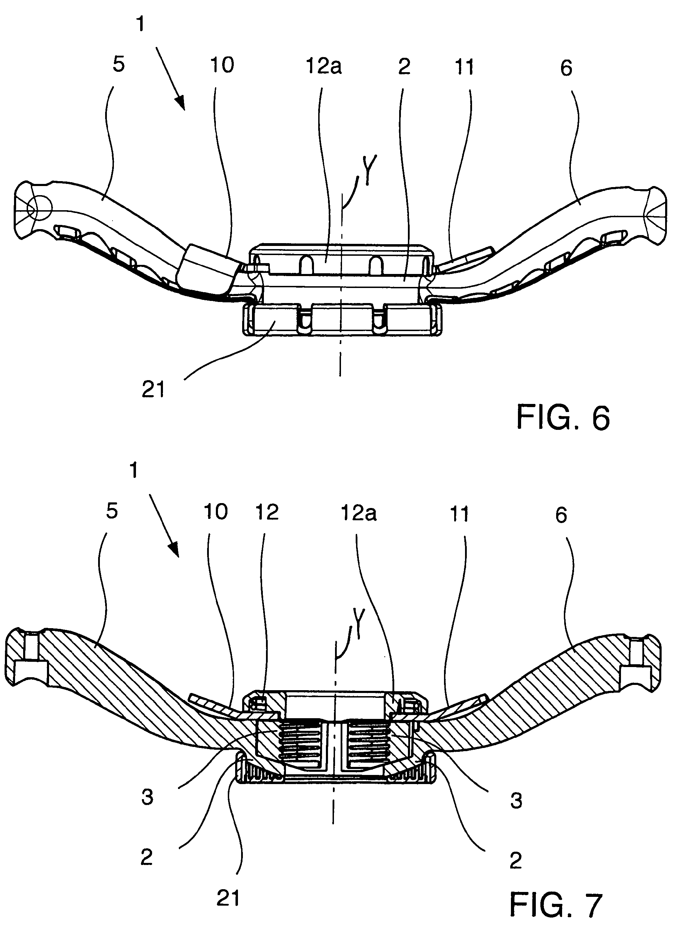

Wie sich insbesondere aus den Fig. 3 und 10 ergibt, können die Gewindesegmente 3 innenliegende gerade (radiale) Stirnflächen 17 aufweisen, die in der Eingriffsstellung gegen gerade (radiale) Stützflächen 18 des Gehäuseteils 2 anliegen. Dadurch sind die Gewindesegmente 3 in der Eingriffsstellung zusätzlich gegen das Gehäuseteil 2 der Schnellspannmutter 1 abgestützt. Bei der Verstellbewegung der Gewindesegmente 3 werden diese dann über ihre gesamte Länge in Umtangsrichtung aus der Eingriffsstellung entlang der schrägen Führungsflächen 8 bewegt und dabei von den geraden Stützflächen 18 abgehoben. Dies ergibt sich insbesondere bei einem Vergleich der Fig. 3 und 7.

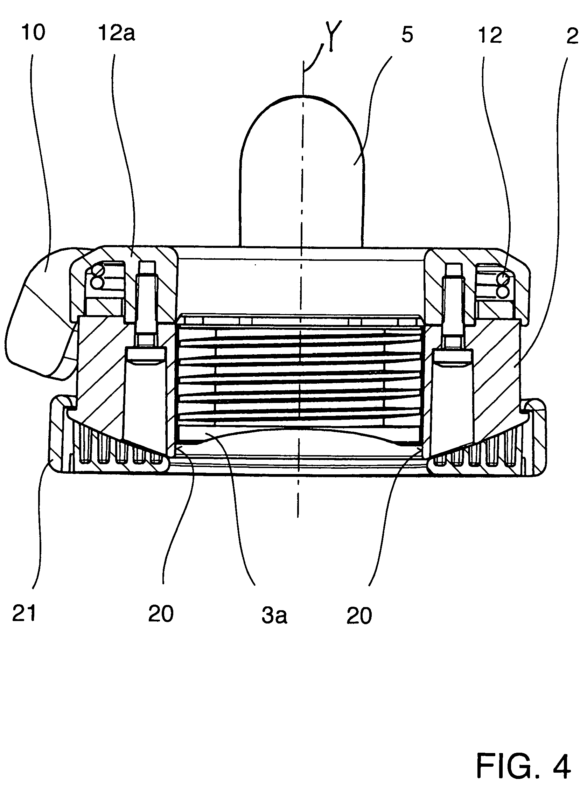

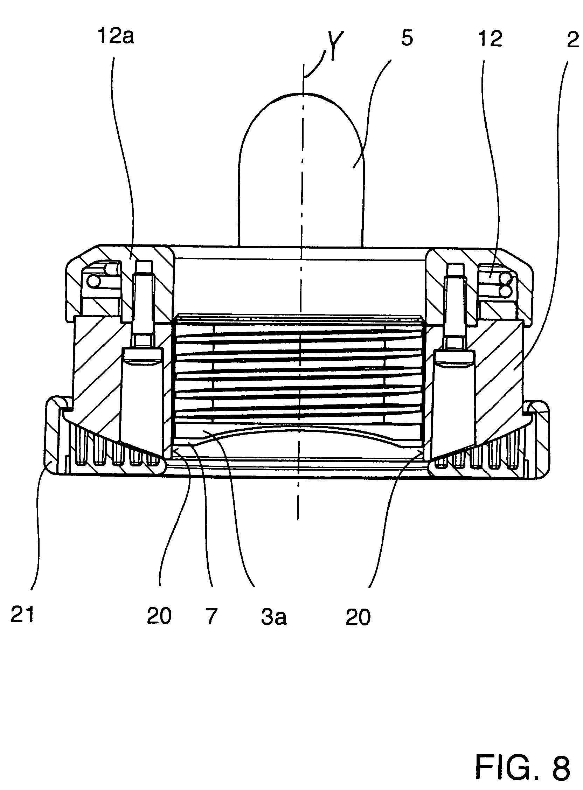

Im Übrigen sind die Gewindesegmente 3 vorzugsweise als Kreisringsegmente ausgebildet und können an den Enden gegenüberliegend an einem Gewindesegment 3 angeordnete äußere gerade Seitenflächen 19 aufweisen, die an eine die geraden Seitenflächen 19 verbindende gewölbte äußere Seitenfläche 19a angrenzen. Dies ist in den Fig. 4 und 8 sowie in den Fig. 10 und 11 dargestellt. Nicht dargestellt ist, dass die geraden Seitenflächen 19 im Eingriffszustand auch auf geraden achsparallelen Führungsflächen 20 des Gehäuseteils 2 aufliegen können. Dadurch ergibt sich eine stabile Führung der Gewindesegmente 3 in dem Gehäuseteil 2.

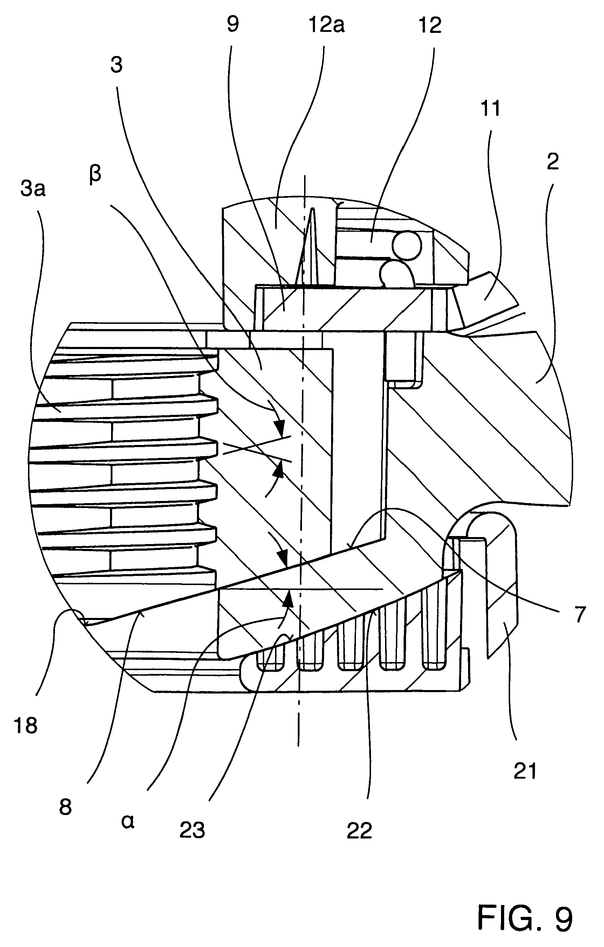

Wie sich insbesondere aus Fig. 9 ergibt, ist der Steigungswinkel α einer schrägen Führungsfläche 7 an dem Gehäuseteil 2 gegenüber der Horizontalen zwischen 1° bis 5°, insbesondere zwischen 2° bis 3°, größer als der halbe Flankenwinkel β/2 des Innengewindeabschnitts 3a. Dadurch wird sichergestellt, dass es bei Belastung der Gewindesegmente 3 über die Welle der Auswuchtmaschine in axialer Richtung zur Ausbildung von radial nach innen gerichteten Kraftkomponenten kommt, die die Gewindesegmente 3 in Richtung zum Außengewinde der Welle der Auswuchtmaschine drücken und somit verhindern, dass es zu einem ungewollten selbsttätigen Öffnen der Gewindesegmente 3 kommt.

Im Übrigen kann an dem Gehäuseteil 2 ein Druckring 21 sphärisch gelagert sein. Zu diesem Zweck weist das Gehäuseteil 2 auf der Seite des Druckrings 21 eine konvexe sphärische Gleitfläche 22 und der Druckring 21 eine konkave sphärische Gleitfläche 23 auf. Der zulässige Ausgleichswinkel bei sphärischer Lagerung des Druckrings 21 an dem Gehäuseteil 2 beträgt vorzugsweise ± 0,5°. Dadurch werden Fluchtungsfehler ausgeglichen, wobei sichergestellt ist, dass die Gewindeflächen der Gewindesegmente 3 weitgehend vollflächig mit den Außengewindeflächen der Welle der Auswuchtmaschine zum Eingriff kommen können. Dies führt zu einem geringen Verschleiß an den Gewindeflächen. Der Druckring 21 kann dabei mittels einer Rast- und/oder Klemmverbindung an dem Gehäuseteil 2 gehalten sein. Bei entsprechender Ausbildung des Gehäuseteils 2 kann bei niedriger Bauhöhe des Druckrings 21 insgesamt eine geringe Bauhöhe der beschriebenen Schnellspannmutter 1 erreicht werden.

## Patentansprüche

1. Schnellspannmutter (1), insbesondere ausgebildet zur Befestigung eines Fahrzeugrades auf der Aufspannwelle einer Auswuchtmaschine, mit einem Gehäuseteil (2) und mit wenigstens zwei in dem Gehäuseteil (2) radial bewegbar angeordneten Gewindesegmenten (3) und mit einem Betätigungsmittel (4) zur radialen Bewegung der Gewindesegmente (3), wobei jedes Gewindesegment (3) einen Innengewindeabschnitt (3a) aufweist, wobei die Gewindesegmente (3) entlang Führungsflächen (7) des Gehäuseteils (2) von einer Eingriffstellung in radialer Richtung nach außen in eine Außereingriffstellung bewegbar sind und wobei die Verstellung der Gewindesegmente (3) von der Eingriffsstellung in die Außereingriffsstellung mittels einer Steuerscheibe (9) erfolgt, die über eine Kulissenführung mit den Gewindesegmenten (3) gekoppelt und federbelastet ist, **dadurch gekennzeichnet, dass** in radialer Richtung nach außen ansteigende schräge Führungsflächen (7) für die Gewindesegmente (3) vorgesehen sind, wobei die schrägen Führungsflächen (7) bei der Bewegung der Gewindesegmente (3) in radialer Richtung mit komplementär ausgebildeten schrägen Stirnflächen (8) der Gewindesegmente (3) zusammenwirken und wobei der Steigungswinkel (α) einer schrägen Führungsfläche (7) zwischen 1 bis 5° größer ist als der halbe Flankenwinkel (β/2) des Innengewindeabschnitts (3a).

2. Schnellspannmutter nach Anspruch 1, **dadurch gekennzeichnet, dass** die Gewindesegmente (3) radial innenliegende gerade Stirnflächen (17) aufweisen, die in der Eingriffstellung gegen gerade Stützflächen (18) des Gehäuseteils (2) anliegen.

3. Schnellspannmutter nach Anspruch 1 oder 2, **dadurch gekennzeichnet, dass** der Steigungswinkel (α) einer schrägen Führungsfläche (7) zwischen 2 bis 3° größer ist als der halbe Flankenwinkel (β/2) des Innengewindeabschnitts (3a).

4. Schnellspannmutter nach einem der vorhergehenden Ansprüche, **dadurch gekennzeichnet, dass** der Innengewindeabschnitt (3a) als Trapezgewindeabschnitt ausgebildet ist mit einem halben Flankenwinkel (β/2) von 15° und dass der Steigungswinkel (α) einer schrägen Führungsfläche (7) 17° beträgt.

5. Schnellspannmutter (1) nach einem der vorhergehenden Ansprüche, **dadurch gekennzeichnet, dass** an dem Gehäuseteil (2) ein dreh- und schwenkbar gelagerter Druckring (21) zum Ausgleich von Fluchtungsfehlern zwischen Gewindeflächen der Gewindesegmente (3) und einem in der Eingriffsstellung gegen die Gewindesegmente (3) anliegenden Außengewinde vorgesehen ist.

6. Schnellspannmutter nach Anspruch 5, **dadurch gekennzeichnet, dass** das Gehäuseteil (2) auf der Seite des Druckrings (21) eine konvexe sphärische Gleitfläche (22) und der Druckring (21) eine konkave sphärische Gleitfläche (23) aufweist.

7. Schnellspannmutter nach einem der vorhergehenden Ansprüche 5 oder 6, **dadurch gekennzeichnet, dass** der Ausgleichswinkel bei sphärischer Lagerung des Druckrings (21) an dem Gehäuseteil (2) wenigstens +/- 0,5°, vorzugsweise von +/-1 bis 3°, beträgt.

## Claims

1. Quick release nut (1), in particular designed to fix a vehicle wheel on the clamping shaft of a balancing machine, with a housing part (2) and with at least two radially movable thread segments (3) in the housing part (2), and with an actuating means (4) for the radial movement of the thread segments (3), wherein each thread segment (3) comprises a female thread portion (3a), wherein the thread segments (3) are movable outwards in the radial direction along guide surfaces (7) of the housing part (2) from an engaged position to a disengaged position, and wherein the adjustment of the thread segments (3) from the engaged position to the disengaged position is effected by means of a control disc (9), which is coupled and spring-loaded with the thread segments (3) via a slotted guide,
**characterized in that**
the guide surfaces (7) inclined upwards and outwards in the radial direction are provided for the thread segments (3), wherein the inclined guide surfaces (7) interact with complementarily shaped inclined end surfaces (8) of the thread segments (3) during movement of the thread segments (3) in the radial direction, and wherein the pitch angle (α) of an inclined guide surface (7) is between 1 ° to 5 ° greater than half the flank angle (ß/2) of the female thread portion (3a).

2. Quick release nut according to claim 1,
**characterized in that**
the thread segments (3) comprises radially inner straight end faces (17), which rest against the straight support surfaces (18) of the housing part (2) in the engagement position.

3. Quick release nut according to claim 1 or 2,
**characterized in that**
the pitch angle (α) of an inclined guide surface (7) is between 2 to 3 ° greater than half the frank angle (ß/2) of the female thread portion (3a).

4. Quick release nut according to one of the preceding claims,
**characterized in that**
the female thread portion (3a) is designed as a trapezoidal thread portion with a half flank angle (ß/2) of 15 °, wherein the pitch angle (α) of an inclined guide surface (7) is 17 °.

5. Quick release nut (1) according to one of the preceding claims,
**characterized in that**
a rotatable and pivotally-mounted pressure ring (21) is provided on the housing part (2) to compensate for misalignment between the threaded surfaces of the thread segments (3), and a male thread rests against the thread segments (3) in the engaged position.

6. Quick release nut according to claim 5,
**characterized in that**
the housing part (2) comprises a convex spherical sliding surface (22) on the side of the pressure ring (21), while the pressure ring (21) comprises a concave spherical sliding surface (23).

7. Quick release nut according to one of the claims 5 or 6,
**characterized in that**
the compensation angle of the spherical bearing of the thrust ring (21) is at least +/- 0.5 °, preferably ±1 ° to 3 °, with respect to the housing part (2).

## Revendications

1. Écrou à serrage rapide (1), plus particulièrement conçu pour la fixation d'une roue de véhicule sur l'arbre de serrage d'une machine d'équilibrage, avec une partie de boîtier (2) et au moins deux segments filetés (3), disposés de manière mobile radialement dans la partie de boîtier (2) et avec un moyen d'actionnement (4) pour le mouvement radial des segments filetés (3), chaque segment fileté (3) comprenant une portion filetée interne (3a), les segments filetés (3) étant mobiles le long de surfaces de guidage (7) de la partie de boîtier (2) à partir d'une position d'emboîtement, dans la direction radiale, vers l'extérieur dans une position de déboîtement et le déplacement des segments filetés (3) de la position d'emboîtement vers la position de déboîtement ayant lieu au moyen d'un disque de commande (9), qui est couplé avec les segments filetés (3) par l'intermédiaire d'un guidage à coulisse et qui est muni d'un ressort, **caractérisé en ce que** des surfaces de guidage (7) obliques montant vers l'extérieur dans la direction radiale sont prévues pour les segments filetés (3), les surfaces de guidage (7) obliques interagissant, lors du déplacement des segments filetés (3) dans la direction radiale, avec des surfaces frontales (8) obliques de formes complémentaires des segments filetés (3) et l'angle de pas (α) d'une surface de guidage (7) oblique étant de 1 à 5° supérieur à la moitié de l'angle de flanc (β/2) de la portion filetée interne (3a).

2. Écrou à serrage rapide selon la revendication 1, **caractérisé en ce que** les segments filetés (3) comprennent des surfaces frontales (17) radiales internes droites qui s'appuient, dans la position d'emboîtement, contre des surfaces d'appui droites (18) de la partie de boîtier (2).

3. Écrou à serrage rapide selon la revendication 1 ou 2, **caractérisé en ce que** l'angle de pas (α) d'une surface de guidage oblique (7) est entre 2 et 3° supérieure à la moitié de l'angle de flanc (β/2) de la portion filetée interne (3a).

4. Écrou à serrage rapide selon l'une des revendications précédentes, **caractérisé en ce que** la portion filetée interne (3a) est conçue sous la forme d'une portion à filetage trapézoïdal et présente un demi-angle de flanc (β/2) de 15° et **en ce que** l'angle de pas (α) d'une surface de guidage oblique (7) est de 17°.

5. Écrou à serrage rapide (1) selon l'une des revendications précédentes, **caractérisé en ce que**, sur la partie de boîtier (2), se trouve une bague de pression (21) logée de manière rotative et pivotante pour la compensation des erreurs d'alignement entre les surfaces filetées des segments filetés (3) et un filetage externe s'appuyant, dans la position d'emboîtement, contre les segments filetés (3).

6. Écrou à serrage rapide selon la revendication 5, **caractérisé en ce que** la partie de boîtier (2) présente, sur le côté de la bague de pression (21), une surface de glissement sphérique convexe (22) et la bague de pression (21) présente une surface de glissement sphérique concave (23).

7. Écrou à serrage rapide selon l'une des revendications 5 ou 6, **caractérisé en ce que** l'angle de compensation lors d'un logement sphérique de la bague de pression (21) sur la partie de boîtier (2) est d'au moins ± 0,5°, de préférence de ± 1 à 3°.
